(19) **Europäisches Patentamt / European Patent Office / Office européen des brevets**

(11) **EP 1 392 008 B1**

(12) **EUROPEAN PATENT SPECIFICATION**

(45) Date of publication and mention
of the grant of the patent:
**12.12.2007 Bulletin 2007/50**

(51) Int Cl.:
**H04B 7/26** (2006.01)

(21) Application number: **02380184.8**

(22) Date of filing: **23.08.2002**

(54) **TETRA infrastructure synchronization method**

Synchronisierungsverfahren für eine Infrastruktur nach dem TETRA-Standard

Procédé de synchronisation pour une infrastructure selon le standard TETRA

(84) Designated Contracting States:
**AT BE BG CH CY CZ DE DK EE ES FI FR GB GR IE IT LI LU MC NL PT SE SK TR**

(43) Date of publication of application:
**25.02.2004 Bulletin 2004/09**

(73) Proprietor: **Teltronic S.A.U.**
**50057 Zaragoza (ES)**

(72) Inventor: **Abadias Pelacho, Roman**
**50014 Zaragoza (ES)**

(74) Representative: **Primo de Rivera y Urquijo, Jose A.**
**General Martinez Campos, 51**
**28010 Madrid (ES)**

(56) References cited:
**WO-A-00/48334**     **WO-A-01/20818**
**GB-A- 2 277 232**     **GB-A- 2 318 481**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Object of the Invention

The present invention refers to a TETRA infrastructure synchronization method for the Nebula infrastructure, which provides essential novelty features and significant advantages with respect to the known and used means for the same purposes in the current state of the art.

More specifically, the invention proposes the development of a method by means of which it is possible to synchronize different zones, located in different physical sites, without requiring a centralized synchronism method, which uses an independent Central Node, in other words, asynchronous with the rest of the system. The alternative synchronism method proposed by the invention is based on the use of a GPS receiver which meets the requirements set by the TETRA (Terrestrial Trunked Radio) standard, and by means of which a time reference is provided which permits synchronizing the different equipment. The proposed method permits knowing at any time the situation in which we are found within the chain of meters, and it permits the synchronization between equipment to be carried out regardless of the different times in which they start running, as from the established reference time. The synchronism topology arranged by the invention includes arranging a synchronism card in every SBS (site base station) zone to be synchronized, which is responsible for providing the necessary signals for the BSR (Base Station Repeater) of each zone.

The field of application of the invention is comprised within the telecommunications field, and, more specifically, within the mobile communications equipment field.

### Background of the Invention

The TETRA method requires demanding synchronization conditions between the different elements comprising it. The Handover or Roaming functions are some of the features which oblige that a system be completely synchronous.

In its synchronization apparatus in the air interface, the TETRA ETS-300-392-0 standard requires synchronizing for all the channels which emit on the same network, with a precision of 1/4 symbol, in other words, with a precision of 13.888 $\mu$s.

This requirement becomes necessary when Roaming functions are required, or when intending to assign a channel from another carrier from a main MCCH channel.

As a consequence, it is a method in which all the channels of all the zones must be emitting the same hyper-frame, the same multiframe, the same frame, the same slot and the same symbol at the same time.

The timings required by the standard are those explained below:

| | | |
|---|---|---|
| (QN) - Quarter Symbol Number, | ranges from (1-1020) | 13.8899889 $\mu$s increment time |
| (SN)- Symbol Number, | ranges from (1-255) | 55.5555556 $\mu$s increment time |
| (TN)- Time-slot Number, | ranges from (1-4) | 14.1666666 ms increment time |
| (FN)- TDMA number of frames, | ranges from (1-18) | 56.6666666 ms increment time |
| (MN)- TDMA number of multiframes ranges from (1-60) | | 1.02 seconds increment time |

Lastly, although it does not have a meter since after this point it is all repetitive, it keeps that the hyper-frames are 60 multiframes, therefore lasting a total of 61.2 seconds (60*1.02 seconds).

So it is necessary that Nebula, as a TETRA method, has a synchronism strategy based on the use of GPS. Furthermore, together with the synchronization, it also needs high stabilities of the different internal clocks incorporated within the Nebula or TETRA infrastructure design.

Some synchronization methods are known in the state of the art, some of which implement solutions that in some sense could be considered related to the proposed object. Thus, PCT patent document number WO 00/48354 discloses a method for estimating the synchronization, in which a selected part of the received signal is compared with another or other predetermined reference signal sequences, also estimating the quality of the received signal. The synchronization position is estimated on the basis of the comparison and estimation of the signal quality. However, the solution proposed by the invention is not used for detecting the synchronization position of a received signal, but rather for achieving the synchronization of the communication system.

On the other hand, PCT patent document number WO 00/07404 discloses a method for synchronizing a telecommunications system in a mobile communications system, which requires the synchronization between the control channel and the direct mode transmission channel. The system includes facilities to permit the direct mode connection between mobiles, due to which the control channel and the direct mode channel must be synchronized for the operation of the method. Communication between mobile stations and a base station is carried out in dual supervision mode and in energy saving mode, the transmission being carried out after checking that there is a determined economical energy mode. At no time does this invention make reference to synchronizing a communication system.

Lastly, PCT patent document number WO 01/20818 describes a synchronization method that consists in knowing the time introduced due to the diffusion or spreading of the radio signal through the air. In this document the synchronization is achieved comparing the GPS reference received in the mobile terminal with the signal received from the Base. With the previous correction, the time instant in which the Base Station transmitted can be established afterwards. It refers to the synchronization of the mobile terminals and it never refers to the synchronization of the Site Base Stations.

### Summary of the Invention

The present invention refers to an alternative synchronization method, with the use of GPS, which meets the requirements set by the TETRA standard. As previously indicated, the method permits knowing at any time the situation we are in within the chain of meters, permitting the synchronization of equipment which start running at different times, for which a reference instant is established. Furthermore, the invention permits greater freedom in the TETRA structure as the BSRs (base station repeaters) are the only synchronous elements of the system; the necessary signals for the BSRs of each zone are fed by means of a respective synchronism card.

With a synchronization method of this nature, in which a centralized synchronism method is not necessary and it is also independent in comparison to the Central Node, significant advantages are provided, among which the most significant are:

- A considerable cost reduction by using simple GPS devices;
- A reduction of the complexity of maintenance with regard to a centralized synchronous method, and
- The possibility of using asynchronous links for joining the node with the zones by means of world Networking elements.

### Brief Description of the Drawings

These and other features and advantages of the invention will become more clearly evident as from the following detailed description of a preferred embodiment, given only as an illustrative and non-limiting example, with reference to the accompanying drawings in which:

Figure 1 shows a schematic representation of the topology of the synchronism of the invention, and
Figure 2 shows a schematic representation of signal generation and transmission from the SYNC card.

### Description of a Preferred Embodiment

As has been established in the preceding, the solution proposed by the present invention consists of establishing a starting instant which all the Nebula method or TETRA infrastructure method elements are referenced to. As an example and for the purpose of helping to understand the following description, a reference instant is provided, randomly selected for the purpose of the description, and which consists of:

Reference instant: 00:00 hours, the 1 of January of 2000.

As from this time on, it is considered the start of the first quarter symbol of the first symbol of the first slot, of the first time slot of the first frame of the first multiframe of a hyper-frame, which will repeat with no time limit.

In order to know the time after the reference instant has elapsed, what situation we are in within the entire chain of meters, it is enough to have only a method indicating to us what time and day it is in the ignition of our system.

With all the mentioned requirements, it is necessary to have a time signal as a reference coming from a GPS receiver, such that in an initiation, it permits preparing each one of the dependent cards of these timers, such that they are synchronized.

In addition to this, it must be kept in mind that the standard requires having a precision at the time of performing the emission, of approximately 1/4 symbol as a maximum phase difference. To achieve this precision, the PPS (1 Pulse Per Second) output of the GPS receiver is used, whose error is of 50 ns for each PPS, in order to continuously synchronize the meter which generates the 1/4 symbol time with this signal.

As the Nebula infrastructure is constituted due to the distribution of TETRA layers carried out in the elements comprising it, the synchronism is required only in the TETRA or BSR carriers.

Unlike other known systems, in which the links between Nodes and Zones must be synchronous, this requirement is not necessary in the case of Nebula, since each carrier is independent from the rest of the method, however it is synchronous with the rest of the carriers due to the chosen synchronism system.

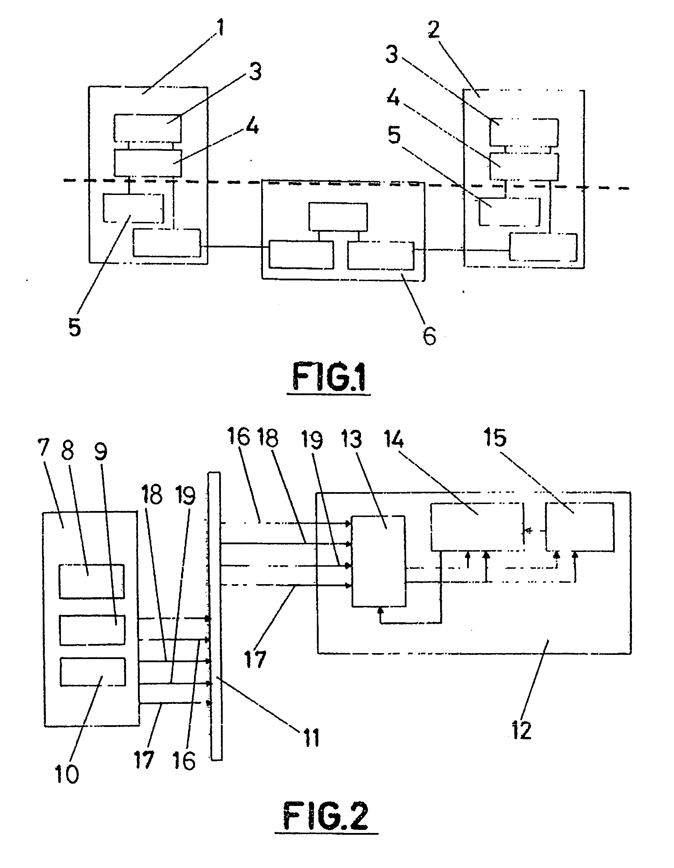

Figure 1 schematically shows a distribution of the synchronous elements of the method, materialized by means of blocks representing:

1- SBS1 Zone
2- SBS2 Zone
3,4- BSR1, BSR2 synchronous elements of the system associated to the different SBS1, SBS2 zones.
5- Synchronism card
6- SCN (Switching and Control Node) central node (asynchronous)

According to the representation, the distribution of the synchronous BSR elements (3,4) can be seen. The synchronization is carried out only in the BSR elements, whose operation within the RCPU (Repeater CPU) control card of the TETRA repeater will be considered below.

As can be understood, within each SBS (Site Base Station) zone (1,2), the presence of a synchronism card (5) is always necessary, which can feed the necessary signals to the BSRs (3,4) belonging to each respective zone.

With all of this, the presence of an implicit GPS receiver in the design of the Nebula architecture is required. This is solved with MSYNC synchronism modules (Synchronism module located in a BSR) and BSYNC (Synchronism module located in an MNI rack).

Electrically, both SYNC modules are the same, changing only the mechanics in order to locate them, be it in the MNI_Rack or in the BSR_Rack.

In figure 2, a schematic representation of the signals generated by the SYNC card and their transmission to the BSRs by means of RJ45 synchronism connectors can be seen. The references in the figure show:

7- BSYNC or MSYNC Module
8- OCXO Oscillator (10 MHz)
9- GPS1 Device
10- GPS2 Device
11- Vertical Bus to the Back-plane, containing two wires for the PPS differential and 2 wires for the GPS TXD
12- RCPU Module
13- GPS selection device
14- Microprocessor element
15- Reception/transmission DSP device of the TETRA carrier.

As can be seen, the electric connection between a BSYNC or MSYNC module (7) and the RCPU (12) is carried out through a bus comprising four lines, two of which lines (16, 17) are used for sending the NMEA1 and NMEA2 frames, while the two lines (18, 19) are used for the PPS1 and PPS2 signals.

According to the aforementioned, the NMEA (National Marine Electronics Association) frames are sent through the rear of the Back-planes, be it as MNI or as BSR, in order to be introduced into the BSRs (12) by means of RJ45 synchronism connectors. The signals travel through said Back-planes of the SBS rack in the form of LVDS signals. The lines are connected in cascade from one BSR (12) to another, hopping by means of straps of RJ45 wires. Each Back-plane incorporates an LVDS signal regenerator circuit so that the signal does not weaken as it hops through the different BSRs.

Two GPS receivers (9,10) are incorporated for system redundancy. In the prevision of the failure of one of them, the signals would be taken from the redundant one. In any case, the second receiver should be considered optional and by no means limiting of the invention.

Within the RCPU (12), the elements responsible for synchronizing and taking the counts of the different meters will be each one of the DSP devices (15) composing the reception and transmission of the TETRA carrier.

According to the invention, the "Oven Alarm" signal has been introduced on the NMEA1 signal (line 16). The behavior of this line is established in the following manner:

- After the firing of the SYNC card (7), the line is at 0 V, thereby indicating that for now, a stable, 10 MHz signal is not being generated by the OCXO (8);
- After a period of approximately 2 minutes, when the oven has reached its working temperature, the "Oven Alarm" signal is released, leaving the NMEA1 line (16) at a 1 logic level, thus permitting the ability to receive the NMEA signals through said line.

From the aforementioned, it is clearly seen that the stability of the oscillator (8) is a priority for synchronization.

The synchronism calculation is carried out as follows:

When an SBS (1, 2) starts, the GPS receiver of the synchronism card (5) housed in said SBS will begin to search for those satellites it has in coverage in order to obtain from them the time information which permits it to generate the NMEA frames 0183 with the time fields filled in.

With this information received by the DSPs (15), the number of seconds with which it could begin to synchronize the system is obtained, each one of the meters loading the corresponding value, in order to synchronize all the frames within a BSR.

In this manner, once the reading is taken and the meters are prepared, when the next attack of the GPS receiver of the PPS signal is received, it will indicate that all the counting and synchronization begins, 1 second after the reading of the seconds obtained in the recently done NMEA reading.

It should be pointed out that the precision with which the PPS is given is of $\pm$ 50 ns. This circumstance covers the needs of the TETRA standard, which requires precisions of 13.889 $\mu$s.

For indicative purposes, an example of a synchronism calculation will be explained for the sole purpose of illustrating the invention.

## <u>CALCULATION EXAMPLE</u>

The manner of carrying out the synchronization will be explained by means of the following example.

For this purpose, suppose that a seconds value of 5000 seconds is loaded at the start of the GPS LVDS signal.

1.- With these values, and taking the time of 0:00 of Monday of this week as a reference, we can position ourselves in the HYPER-FRAME found in the second 5000.

```
5000 s / 61.2 s (duration of a Hyper-frame) = 81.699346 Hyper-frames.
```

However, in order to know which part of the Hyper-frame we are in, it is operated as follows:

```
81.6699346 Hyper-frames - 81 = 0.699346 Hyper-frames
```

```
0.699346 Hyper-frames * 61.2 s per Hyper-frame = 42.8 s.
```

This indicates that we are in second 42.8 of the Hyper-frame. Keeping in mind that the synchronism is carried out when the next PPS arrives, all the calculations of the meters will be carried out then for a second latter, that is to say, at 43.8 seconds of the Hyper-frame, the system start up will be performed.

2.- Keeping in mind that there are 60 Multiframes in a Hyper-frame, it can be calculated in which Multiframe we are in at the moment of synchronism. To do so, the following proportion will be established:

If 60 Multiframes last 61.2 seconds : X multiframes last 43.8 seconds;

$$X = \frac{60*43.8}{61.2} = 42.941176 \text{ Multiframes}$$

that is to say, the moment of synchronism occurs in frame 43, since 42 has passed entirely and we are in the fraction of the following frame. Then, it is verified that the meter

MN= 43

3.- Below, it will be calculated in which frame, within the multiframe, the method will start. For this calculation, it must be kept in mind that a multiframe comprises 18 frames:

0.941176 multiframe parts * 18 frames per multiframe= 16.941168, this being the frame we are in at the moment of synchronism, that is to say in the time of frame 17,

FN=17

4.- In order to calculate the time slot we will be in at the moment of synchronization, it must be kept in mind that a frame has 4 time slots. Thus:

0.941168 frame parts * 4 time slots per frame = 3.764672 time slots, which indicates that we will be in time slot 4 at the moment of synchronization,

TN=4

5.- Below, it can be seen how to synchronize the Symbol which must be emitted in that instant:

0.764672 time slot parts * 225 symbols per time slot = 195.

With remainder of 0.

SN=195.

Upon analyzing the result of the load of the meters, it can be seen that the symbol time is a multiple of 1 second, therefore, the SN meter with a remainder of 0 will always be obtained.

THE SYNCHRONIZATION INSTANT will occur when, once the meters have started, the method receives the next PPS from the GPS receiver, therefore, as from it, the meter will begin to increment 1/4 symbol of a value of 13.888 $\mu$.s.

In this manner, it obtains that with one equipment firing on Monday and another firing on Tuesday, the latter is fired, emitting in synchronization, with the meters in a position which is identical to the first one.

In order to maintain the synchronism after an initialization, it must be attended to by means of an interruption to each PPS reaching us in order to set the QN meter to 0 at a 1/4 symbol level, whose maximum value can reach 1020. In this manner, it achieves having the entire method synchronized, only these two signals being necessary to do so.

Up to now, the manner of synchronizing the system in a week has been seen on the basis of a substantial sum of seconds.

If checking the seconds that there are in one week:

$$\texttt{60 s (per minute) * 60 m (per hour) * 24h (per day) * 7}$$
$$\texttt{days (in one week) = 604,800 seconds in one week}$$

If this value is divided by the time it takes a TETRA signaling to finish a complete cycle, in other words, a Hyper-frame:

$$\texttt{604800 s / 61.2 s = 9882.3529…}$$

it can be seen that the Hyper-frame time is not a multiple by week, but rather, by multiplying by 17, an integer value is obtained. Therefore, 17 weeks are needed in order to close a complete cycle of Hyper-frames that can be repeated in time. This permits establishing that:

If a Hyper-frame starts on Monday at 0:00 hours in the morning, 17 full weeks will have to elapse in order for the start of the Hyper-frame to coincide with the start of the week.

At the start, then, it will be necessary to obtain the number of seconds we are in within the 17 weeks in which the Hyper-frame becomes periodical. To do so, a calendar must be prepared which provides the number of correct days from a specific date, as the 1 of January of 2000 could be according to the example considered.

All the BSRs belonging to Nebula will be synchronized by taking into account that the start of a Hyper-frame occurred on that date.

In the preceding, a preferred embodiment of the synchronization method proposed by the invention has been described, according to how it has been conceived. However, skilled persons in the art will understand that within its essence, variations and modifications of detail could be introduced without implying a change in the scope of the invention which is claimed below.

**Claims**

1. Tetra infrastructure synchronization method for a Tetra system comprising at least two site base station zones (1,2), each comprising a base station repeater (3,4) intended for knowing at all times the situation we are in and for permitting synchronization between equipment regardless of the instant in which they start running, **characterized in that** it consists of:

   - pre-defining an arbitrary initial instant in time, which all the elements of the system are referenced to for its synchronization with a precision level of 1/4 symbol according to the TETRA standards,
   - making this reference instant constitute the start of the first quarter symbol for the first symbol of the first time slot of the first frame of the first multiframe of a hyper-frame all of which will become repetitive with no time limit,
   - recognizing the time elapsed between said reference instant and the day and time of firing of a base station repeater, by means including a GPS receiver (9) that permits, by means of an initiation, the synchronization of the repeater CPU control cards (12) and,

- synchronization of the repeater CPU control cards (12) in the base station repeater (3,4) dependent on the time elapsed ant the signals from the GPS receiver (9).

2. Method according to claim 1, **characterized in that** in one implementation manner, each one of the site base station zones (1,2) to be synchronized, located in different physical sites, includes synchronous base station repeater elements (3,4) related to a synchronism card (5) responsible for feeding the necessary signals to the base station repeater elements (3,4), and said site base station zones (1,2) being related to a central, asynchronous switching and control central node (6).

3. Method according to one of the previous claims, **characterized in that** each synchronism card (5) included in a synchronism module (7) incorporates a stable internal OCXO oscillator (8) at a frequency of 10 MHz, and at least one GPS receiver (9) in connection with an RCPU module (12) through a vertical bus (11) composed of 4 wires, of which two wires are intended for sending National Marine Electronic Associations frames and the other two wires are intended for sending 1 Pulse per Second differential.

4. Method according to claim 3, **characterized in that** the synchronism module (7) preferably comprises a second redundant GPS receiver (10).

5. Method according to claim 3, **characterized in that** the RCPU module (12) incorporates a GPS receiver (9, 10) selection device (13), a microprocessor (14), and Pulse per Second devices (15) responsible for composing reception and transmission of the TETRA carrier.

6. Method according to one or more of the previous claims, **characterized in that** the Pulse Per Second output of the GPS receiver (8,9) is used, whose error is of 50 ns for each Pulse per Second, in order to continuously synchronize the meter responsible for generating the 1/4 symbol time with the signal.

7. Method according to one or more of the previous claims, **characterized in that** the synchronization of the system is performed 1 second after a seconds reading is obtained by means of the National Marine Electronics Association reading carried out by the GPS receiver of an site base station zone (1,2) on any of the satellites within its reach, for obtaining the hourly information which permits it to generate the National Marine Electronics Association frames with the time fields filled in.

8. Method according to one or more of the previous claims, also **characterized in that** the connection lines from one synchronous base station repeater element (1,2) to another are arranged in cascade, having foreseen the incorporation of a signal regenerator circuit in each back-plane, intended to prevent the signal from weakening as it hops through the different base station repeaters.

**Patentansprüche**

1. Verfahren zur Synchronisation von Tetra-Infrastruktur für ein mindestens zwei Standortbasisstationsbereiche (1, 2) umfassendes Tetra-System, wobei jeder einen Basisstationsverstärker (3, 4) umfasst, vorgesehen um ständig die bestehende Situation zu kennen und um die Synchronisation zwischen Geräten unabhängig vom Zeitpunkt ihres Betriebsbeginnes zuzulassen, **dadurch gekennzeichnet, dass** es:

- die Vordefinition eines willkürlichen Anfangszeitpunktes, auf den alle Elemente des Systems bezogen sind für seine Synchronisation mit einem Genauigkeitsniveau von 1/4 Symbol gemäß den TETRA-Normen,
- das Verursachen, dass dieser Referenzzeitpunkt der Beginn für das Symbol des ersten Viertels für das erste Symbol des ersten Zeitfensters des ersten Rahmens des ersten Mehrfachrahmens eines Hyperrahmens bildet, wobei sich alle ohne zeitliche Beschränkung wiederholen werden,
- die Erkennung der verstrichenen Zeit zwischen dem Referenzzeitpunkt und dem Tag und Uhrzeit der Aktivierung eines Basisstationsverstärkers, durch Mittel, die einen GPS-Empfänger (9) enthalten, der durch eine Initialisierung die Synchronisation der Steuerkarten (12) des Verstärker-CPUs erlaubt, und,
- die Synchronisation der Steuerkarten (12) des Verstärker-CPUs im Basisstationsverstärker (3,4) abhängig von der verstrichenen Zeit und den Signalen vom GPS-Empfänger (9)

umfasst.

**2.** Verfahren gemäß Anspruch 1, **dadurch gekennzeichnet, dass** in einer Implementationsart jeder der in verschiedenen physikalischen Orten untergebrachten Standortbasisstationsbereiche (1, 2) die synchronisiert werden sollen, synchrone Basisstationsverstärkerelemente (3, 4) die mit einer Synchronkarte (5) in Beziehung stehen enthält, verantwortlich für die Speisung der notwendigen Signale zu den Basisstationsverstärkerelementen (3, 4) verantwortlich ist, und wobei die Standortbasisstationsbereiche (1, 2) mit einem zentralen, asynchronen Schalt- und Steuerungszentralknoten (6) in Beziehung stehen.

**3.** Verfahren gemäß einem der vorgehenden Ansprüchen, **dadurch gekennzeichnet, dass** die in einem Synchronmodul (7) enthaltene Synchronkarte (5) einen stabilen internen OCXO-Oszillator (8) bei einer Frequenz von 10 MHz und mindestens einen GPS-Empfänger (9), in Verbindung mit einem RCPU-Modul (12) durch einen aus 4 Drähten bestehenden vertikalen Bus (11) beinhaltet, wobei zwei Drähte dazu vorgesehen sind, um "National Marine Electronic Association"-Rahmen zu senden und die anderen zwei Drähte zum Senden eines "ein Puls pro Sekunde (PPS)"- Differential vorgesehen sind.

**4.** Verfahren gemäß Anspruch 3, **dadurch gekennzeichnet, dass** das Synchronmodul (7) vorzugsweise einen zweiten redundanten GPS-Empfänger (10) umfasst.

**5.** Verfahren gemäß Anspruch 3, **dadurch gekennzeichnet, dass** das RCPU-Modul (12) einen GPS-Empfänger (9, 10), eine Auswahlvorrichtung (13), einen Mikroprozessor (14) und "Puls pro Sekunde"-Vorrichtungen (15) beinhaltet, die für die Empfangs- und Übertragungsbildung des TETRA-Trägers verantwortlich sind.

**6.** Verfahren gemäß einem oder mehreren der vorgehenden Ansprüchen, **dadurch gekennzeichnet, dass** der "Puls pro Sekunde"-Ausgang des GPS-Empfängers (8, 9) benutzt wird, dessen Fehler 50 ns für jeden "Puls pro Sekunde" beträgt, um kontinuierlich den für die Erzeugung der 1/4-Symbolzeit verantwortlichen Zähler mit dem Signal zu synchronisieren.

**7.** Verfahren gemäß einem oder mehreren der vorgehenden Ansprüchen, **dadurch gekennzeichnet, dass** die Synchronisation des Systems 1 Sekunde nach Erhalt einer Sekundenlesung mittels der vom GPS-Empfänger eines Standortbasisstationsbereiches (1, 2) eines beliebigen sich in Reichweite befindlichen Satelliten durchgeführten "National Marine Electronics Association"-Lesung ausgeführt wird, um die stündliche Information zu erhalten, die es ihm erlaubt, die "National Marine Electronics Association"-Rahmen mit den ausgefüllten Zeitfeldern zu erzeugen.

**8.** Verfahren gemäß einem oder mehreren der vorgehenden Ansprüchen, ebenfalls **dadurch gekennzeichnet, dass** die Verbindungslinien von einem synchronen Basisstationsverstärkerelement (1, 2) zum anderen als Kaskade angeordnet sind, wobei in jeder Rückwand der Einbau einer Signalregeneratorschaltung vorgesehen ist, um zu verhindern, dass sich das Signal beim Springen durch die verschiedenen Basisstationsverstärker abschwächt.

**Revendications**

**1.** Procédé de synchronisation d'infrastructure Tetra pour un système Tetra comprenant au moins deux zones de sites de station de base (1, 2), comprenant chacune un répéteur de station de base (3,4) destiné à savoir à tout moment la situation dans laquelle nous nous trouvons et à permettre la synchronisation entre des équipements sans tenir compte de l'instant dans lequel ils commencent à se mettre en marche, **caractérisé en ce qu'**il consiste à :

- prédéfinir un instant initial arbitraire à temps, dans lequel tous les éléments du système sont référencés pour sa synchronisation avec un niveau de précision d'un quart de symbole selon les standards TETRA,
- faire que cet instant de référence constitue le début du premier quart de symbole pour le premier symbole du premier intervalle de temps de la première trame de la première multitrame d'une hypertrame toutes celles-ci devenant répétitives sans limite de temps,
- reconnaître le temps écoulé entre l'instant de référence et le jour et le moment d'allumage d'un répéteur de station de base, par des moyens incluant un récepteur GPS (9) qui permet, au moyen d'une initiation, la synchronisation des cartes (12) de contrôle CPU du répéteur et,
- synchroniser les cartes (12) de contrôle CPU du répéteur dans le répéteur de station de base (3, 4) dépendant du temps écoulé et des signaux provenant du récepteur GPS (9).

**2.** Procédé selon la revendication 1, **caractérisé en ce que** dans un mode de mise en oeuvre, chacune des zones de sites de station de base (1,2) à synchroniser, situées dans différents sites physiques, inclut des éléments de répéteur de station de base (3,4) synchrones associés à une carte (5) de synchronisme responsable d'alimenter les signaux nécessaires vers les éléments de répéteur de station de base (3, 4), et lesdites zones de sites de station de base (1,2) étant associées à un noeud central asynchrone de commutation et de contrôle central (6).

**3.** Procédé selon une des revendications précédentes, **caractérisé en ce que** chaque carte de synchronisme (5) incluse dans un module de synchronisme (7) incorpore un oscillateur OCXO (8) interne stable à une fréquence de 10 MHz, et au moins un récepteur GPS (9) en connexion avec un module RCPU (12) à travers un bus vertical (11) composé de 4 fils, desquels deux fils sont destinés à envoyer des trames de l'Association d'Electronique de la Marine Nationale et les deux autres fils sont destinés à envoyer un différentiel d'une impulsion par seconde.

**4.** Procédé selon la revendication 3, **caractérisé en ce que** le module de synchronisme (7) comprend de préférence un deuxième récepteur GPS (10) redondant.

**5.** Procédé selon la revendication 3, **caractérisé en ce que** le module RCPU (12) incorpore un dispositif de sélection (13) de récepteurs GPS (9, 10), un microprocesseur (14) et des dispositifs d'impulsion par seconde (15) responsables de composer la réception et la transmission de la porteuse TETRA.

**6.** Procédé selon une ou plusieurs des revendications précédentes, **caractérisé en ce que** l'on utilise la sortie d'impulsion par seconde du récepteur GPS (8,9), dont l'erreur est de 50 ns pour chaque impulsion par seconde, afin de synchroniser en continu le compteur responsable de générer le temps de quart de symbole avec le signal.

**7.** Procédé selon une ou plusieurs des revendications précédentes, **caractérisé en ce que** la synchronisation du système est réalisée une seconde après l'obtention d'une lecture de secondes au moyen de la lecture de l'Association d'Electronique de la Marine Nationale réalisée par le récepteur GPS d'une zone de site de station de base (1,2) sur n'importe lequel des satellites à sa portée, pour obtenir l'information horaire qui lui permet de générer les trames de l'Association d'Electronique de la Marine Nationale avec les champs de temps complétés.

**8.** Procédé selon l'une ou plusieurs des revendications précédentes, également **caractérisé en ce que** les lignes de connexion entre un élément synchrone de répéteur de station de base (1, 2) et un autre sont disposées en cascade, l'incorporation d'un circuit régénérateur de signaux étant prévue dans chaque fond de panier, destiné à éviter que le signal se débilite lorsqu'il saute à travers les différents répéteurs de station de base.

EP 1 392 008 B1

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0048354 A
- WO 0007404 A
- WO 0120818 A